# EUROPÄISCHE PATENTSCHRIFT

(11) **EP 0 654 318 B1**
(45) Veröffentlichungstag und Bekanntmachung des Hinweises auf die Patenterteilung: **16.12.1998**
(21) Anmeldenummer: 94110584.3
(22) Anmeldetag: 02.07.1994
(51) Int. Cl.: B23F 19/05, B23F 19/06, B23F 23/04, B23F 23/12, B23Q 7/04

(54) **Maschine zum Feinbearbeiten der Zahnflanken von zahnradförmigen Werkstücken mit einem innenverzahnten Werkzeug**
Machine for finishing the tooth flanks of gear-shaped workpieces using an internally toothed tool
Machine pour la finition de flancs de dents des pièces sous forme de roue dentée en utilisant un outil à denture intérieure

(30) Priorität: 16.07.1993 DE 4323935
(43) Veröffentlichungstag der Anmeldung: 24.05.1995
(73) Patentinhaber: THE GLEASON WORKS, Rochester New York 14692-2970 (US)
(72) Erfinder: Huber, Manfred, D-81247 München (DE); Müller, Richard, D-81539 München (DE); Schaller, Anton, D-85386 Eching (DE)
(74) Vertreter: Stahl, Gerhard F.W.

(56) Entgegenhaltungen:
- EP-A- 0 052 149
- EP-A- 0 515 791
- DE-U- 8 910 726
- DE-U- 9 300 936
- FR-A- 2 577 455
- US-A- 2 986 851
- US-A- 4 457 659

## Beschreibung

Die Erfindung betrifft eine Maschine nach dem Oberbegriff des Patentanspruchs 1; sie geht damit aus vom Stand der Technik nach der DE-U-93 00 936.

Bei der dort beschriebenen Maschine sind Relativbewegungen zwischen Werkzeug und Werkstück nur parallel zur Werkstückachse (Z-Richtung) und rechtwinklig dazu (X-Richtung) möglich, wobei beide Bewegungen von dem auf einem Kreuzschlitten angeordneten Werkzeugträger ausgeführt werden. Zusätzlich ist der Werkzeugträger um eine rechtwinklig zur X- und Z-Richtung gerichtete Achse schwenkbar, um ballige Zahnflanken erzeugen zu können. Ein Vershiften des Werkzeugs, wie es u.a. bei der Verwendung von Doppel-Werkzeugen erforderlich ist, ist auf dieser Maschine nicht möglich. Die bekannte Maschine weist darüber hinaus eine mit dem Reitstock kombinierte Einrichtung auf zum Ein- und Ausschwenken eines Abrichtwerkzeugs in das bzw. aus dem Werkzeug, die um eine rechtwinklig zur X- und Z-Richtung gerichtete Achse schwenkbar und parallel zum Kreuzschlitten in der Z-Richtung verschiebbar und dafür antreibbar ist. Beide in der Z-Richtung verschiebbaren Einrichtungen und die Schwenkeinrichtung für das Abrichtwerkzeug benötigen somit jeweils einen eigenen Motor, ein eigenes Getriebe oder dergleichen, eigene Führungen u.s.w., was herstellungs- und steuerungsmäßig einen erheblichen Aufwand bedeutet.

Von diesen Nachteilen ausgehend liegt der Erfindung die Aufgabe zugrunde, eine Maschine der genannten Art hinsichtlich der mit ihr auszuführenden Feinbearbeitungsverfahren universell zu gestalten und dabei herstellungs- und steuerungsmäßig zu vereinfachen. Dabei soll eine kompakte Bauweise erreicht werden und eine Handhabung sowohl der Werkstücke als auch des Abrichtwerkzeugs mit nur einer Einrichtung möglich sein.

Diese Aufgabe wird mit einer Maschine der genannten Art gelöst, die die im kennzeichnenden Teil des Patentanspruchs 1 angegebenen Merkmale aufweist.

Der Umstand, daß die relative Bewegungsmöglichkeit zwischen Werkzeug und Werkstück in der Z-Richtung erfindungsgemäß dem Spindelstock bzw. dem Reitstock zugeordnet ist, erbringt folgende Vorteile. Die gesteuerte Bewegung von Spindelstock bzw. Reitstock kann neben ihrer Funktion als Technologie-Bewegung in der Z-Richtung auch als Werkstück- und Abrichtwerkzeug-Bewegung zur automatisierbaren Werkstück- bzw. Abrichtwerkzeug-Handhabung genutzt werden. Durch die Bewegung des Werkstücks in Richtung seiner Achse (Z-Richtung) und die Bewegung des Werkzeugkopfes in der Y-Richtung besteht gewissermaßen eine Kreuzschlittenfunktion, die in Verbindung mit der radialen Zustellbewegung in X-Richtung alle verfahrenstechnisch erforderlichen Bewegungen ermöglicht, ohne daß eine Tischschwenkung oder dergleichen ausgeführt werden muß. Auf der erfindungsgemäß ausgeführten Maschine kann somit nach dem Tauchverfahren ebenso wie nach dem Parallelverfahren oder nach dem Diagonalverfahren gearbeitet werden. Daneben ist die Erzeugung balliger und/oder konischer Zahnflanken möglich. Die Maschine erlaubt auch ein Vershiften des Werkzeugs beim Einsatz von breiten Werkzeugen bzw. von solchen mit einer Schrupp- und einer Schlichtzone.

Eine Maschine, auf der Relativbewegungen zwischen Werkzeug und Werkstück außer in der X- und Z-Richtung auch in der Y-Richtung ausführbar sind, ist an sich aus der DE-U-89 10 726 bekannt. Alle drei Bewegungen sind dabei dem Werkzeugkopf zugeordnet, so daß keine davon für die Handhabung der Werkstücke bzw. des Abrichtwerkzeugs nutzbar ist.

Mit der Weiterbildung der Maschine gemäß dem Patentanspruch 2 wird eine auch bei der Anordnung einer Handhabungseinrichtung kompakte Bauweise erreicht. Die angegebene, fest in die Maschine integrierte Anordnung erlaubt ein Handhaben aller denkbaren Zahnradformen und Wellen außerhalb des eigentlichen Bearbeitungs- oder Naßraumes, der dadurch sehr klein gehalten und mit einfachen Elementen geschlossen werden kann.

Die Erfindung läßt eine ganze Reihe von unter den Wortlaut der Ansprüche fallenden Ausführungsvarianten zu, die ebenfalls in den Schutzbereich fallen sollen.

Die Erfindung wird nachstehend anhand zweier in vier Figuren dargestellter Ausführungsbeispiele näher beschrieben. Dabei zeigt
- Fig. 1: den Aufbau der erfindungsgemäßen Maschine in einer perspektivischen Ansicht,
- Fig. 2 und 3: einen Vertikal- und einen Horizontalschnitt durch den Arbeitsraum in vereinfachter Darstellung, und
- Fig. 4: eine Abwandlung der in Fig. 1 gezeigten Maschine mit einer integrierten Handhabungseinrichtung.

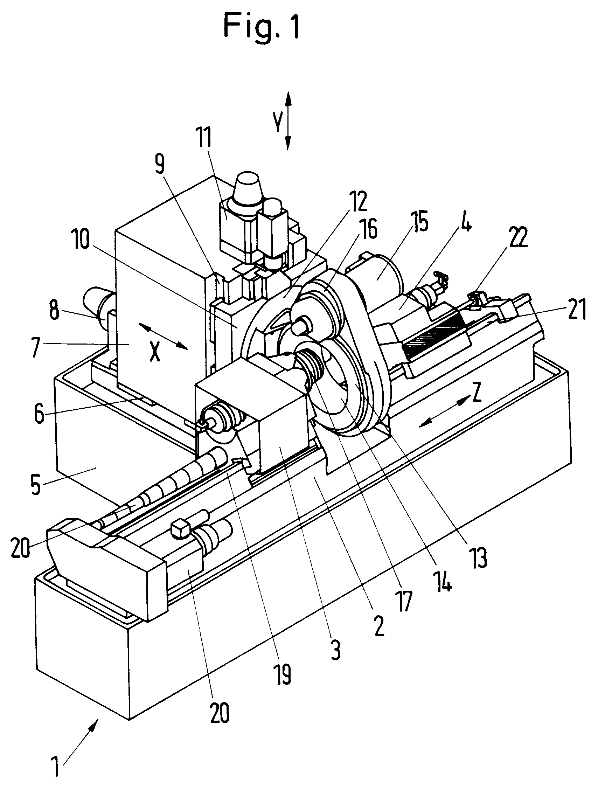

Die in den Figuren 1 bis 3 gezeigte Maschine besitzt ein Maschinengestell 1, das etwa die Form eines liegenden T hat. Der dem Querbalken des T entsprechende Bereich an der Vorderseite der Maschine bildet ein Maschinenbett 2, auf dem ein Spindelstock 3 und ein Reitstock 4 verschiebbar angeordnet sind. Auf dem anderen, sich etwa in der Mitte des Maschinenbetts 2 im rechten Winkel dazu nach hinten erstreckenden Bereich 5 des Maschinengestells 1 ist in einer Längsführung 6 ein Horizontalschlitten 7 in Pfeilrichtung X verschiebbar und dafür mit einem Motor 8 antreibbar angeordnet. An seiner dem Bett 2 zugewendeten Seite besitzt der Horizontalschlitten 7 eine Vertikalführung 9, in der ein Vertikalschlitten 10 in Pfeilrichtung Y höhenverstellbar und dafür mit einem Motor 11 antreibbar angeordnet ist. An der dem Horizontalschlitten 7 abgewendeten Seite weist der Vertikalschlitten 10 eine in Fig. 1 nur angedeutete Rundführung 12 auf, in der ein Werkzeugkopf 13 um eine in X-Richtung liegende Achse A winkeleinstellbar aufgenommen ist. Dabei ragt der Werkzeugkopf 13 im wesentlichen zwischen den Spindelstock 3 und den Reitstock 4. In einer zentralen Öffnung 14 des Werkzeugkopfs 13 ist ein innenverzahntes Werkzeug W drehantreibbar aufgenommen. Der Antrieb dafür erfolgt mit einem Motor 15 über ein nur angedeutetes Getriebe 16 mit spielfrei vorgespannten Zahnrädern oder einem Kettentrieb.

Der Spindelstock 3 und der Reitstock 4 sind mit Einrichtungen 17, 18 zum Spannen eines zahnradförmigen Werkstücks W versehen, das sich bei seiner Bearbeitung im Innern des Werkzeugs T mit diesem in kämmendem Zahneingriff befindet. Die Werkstückachse C2, die erwähnte Achse A und - bei nicht geschwenktem Werkzeug T - die Werkzeugachse C1 liegen dabei in einer Ebene. Zum Wechseln des Werkstücks W wird es aus dem Werkzeug T herausgefahren. Dazu ist der Spindelstock 3 auf dem Bett 2 in einer Führung 19 mittels eines hydraulischen Antriebs 20 in Pfeilrichtung Z verschiebbar und der Reitstock 4 wird in einer Führung 21 ebenfalls in Pfeilrichtung Z nachgeführt, wofür eine nicht dargestellte Steuerung und ein hydraulischer Antrieb 22 vorgesehen sind. Um beim Bewegen von Spindelstock 3 und Reitstock 4 die Wirkung der Spanneinrichtungen 17, 18 nicht zu beeinträchtigen, muß der Reitstock 4 bei einer Bewegung nach links im Sinne der Fig. 1 gewissermaßen voreilen und bei einer Bewegung nach rechts verzögern.

Jede der Pfeilrichtungen X, Y und Z verläuft senkrecht zu den beiden anderen.

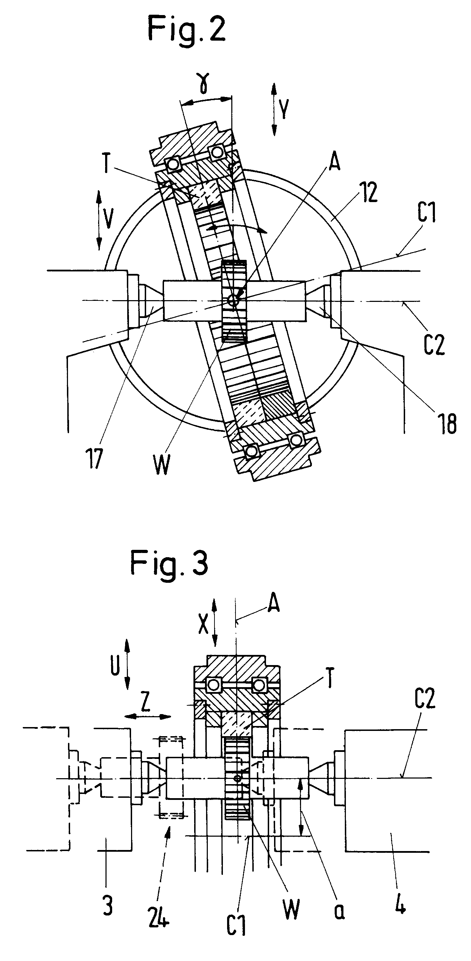

Das Werkzeug W ist in der Regel ein innenverzahntes Konrad oder Hartschabrad od. dgl. mit einer abrasiven, d.h. keine geometrisch definierten Schneidkanten aufweisenden Oberfläche seiner Zahnflanken, zum Feinbearbeiten von insbes. gehärteten Werkstücken. Es kann auch wesentlich breiter sein als in Fig. 3 gezeigt oder - wie in der unteren Hälfte von Fig. 2 gezeigt - über die Breite seiner Flanken unterschiedliche Strukturen aufweisen zum Schruppen und Schlichten, wobei das Werkzeug T bei der Bearbeitung relativ zum Werkstück W vershiftet werden muß, um die verschiedenen Flankenbereiche zum Einsatz zu bringen. Anstelle der genannten abrasiven Werkzeuge können für die Bearbeitung von noch nicht gehärteten Werkstücken aber auch innenverzahnte Schabräder mit geometrisch definierten Schneiden auf ihren Zahnflanken zum Einsatz kommen.

Beim Feinbearbeiten mit zahnradförmigen Werkzeugen wird in der Regel mit einem Achskreuzwinkel γ zwischen der Werkzeugachse C1 und der Werkstückachse C2 gearbeitet. Dazu wird der Werkzeugkopf 13 mit dem Werkzeug T um die Achse A geschwenkt, so daß die Achse C1 schräg zur Achse C2 steht, die immer in Pfeilrichtung Z verläuft. Die Zustellbewegung des Werkzeugs T relativ zum Werkstück W im Sinne einer Veränderung des Achsabstands a erfolgt durch eine Bewegung des Horizontalschlittens 7 in Pfeilrichtung X. Für eine beim Parallel-und Diagonalverfahren erforderliche Relativbewegung zwischen Werkzeug T und Werkstück W in Achsrichtung C2 wird die erwähnte Möglichkeit, den Spindelstock 3 zu verschieben und den Reitstock 4 nachzuführen, ausgenutzt, wobei dieser Bewegung beim Diagonalverfahren eine senkrecht dazu gerichtete Bewegung des Werkzeugs T überlagert wird, die durch Verschieben des Vertikalschlittens 10 in Pfeilrichtung Y bewerkstelligt wird. Zum Erzeugen balliger und/oder konischer Zahnflanken wird zusätzlich noch eine Bewegung des Werkzeugs T in Pfeilrichtung X überlagert. Dieses Prinzip ist aus der Patentanmeldung P 42 14 851.0 bekannt.

Mitunter ist es erwünscht oder auch notwendig, das Werkstück W nicht über das Werkzeug T mitdrehen zu lassen, sondern ebenfalls anzutreiben. In solchen Fällen kann die Maschine - wie aus der DE 27 11 282 A1 bekannt - mit elektronisch gekoppelten Einzelantrieben für das Werkzeug T und für das Werkstück W ausgerüstet sein. Der in den Figuren nicht dargestellte Antrieb für das Werkstück W ist dabei im oder am Spindelstock 3 untergebracht.

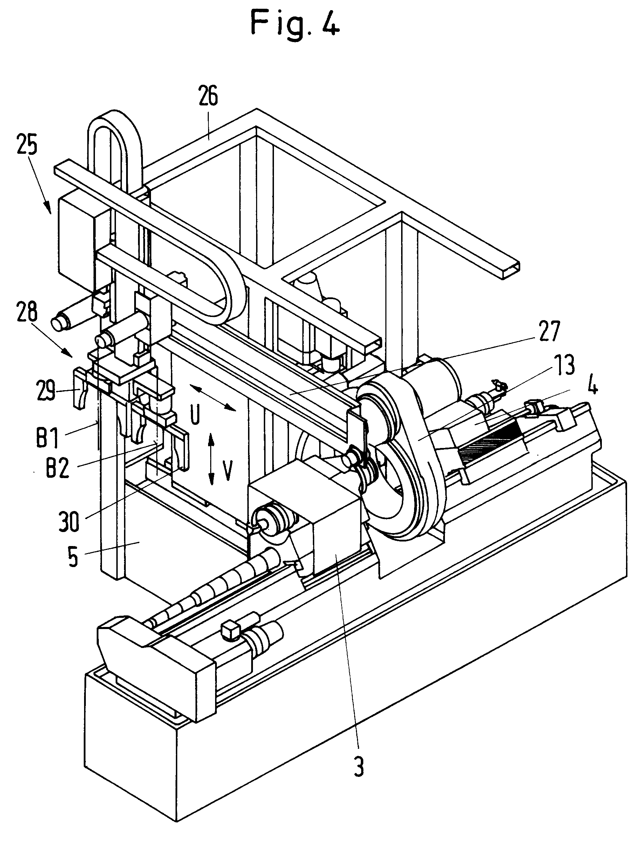

Die Bauweise der Maschine mit dem T-förmigen Maschinengestell 1 ermöglicht die platzsparende Anordnung einer Handhabungseinrichtung 25. Diese besitzt ein Gestell 26, das seitlich vom Bereich 5 des Maschinengestells 1 mit diesem verbunden ist und es samt dem Horizontalschlitten 7 überragt. Auf der dem Spindelstock 3 zugewendeten Seite des Gestells 26 ist eine Führung 27 angebracht, in der eine Greifeinrichtung 28 horizontal in Pfeilrichtung U, d.h. parallel zur Pfeilrichtung X, zum Maschinenbett 2 hin und von diesem weg bewegt werden kann. Die Greifeinrichtung 28 weist zwei vertikal in Pfeilrichtung V, d.h. parallel zur Pfeilrichtung Y, verfahrbare Greifer 29, 30 auf, von denen beispielsweise einer (29) ein zu bearbeitendes Werkstück W und der andere (30) ein fertig bearbeitetes Werkstück aufnimmt. Zum Werkstückwechsel werden der Spindelstock 3 und der Reitstock 4 wie oben beschrieben im Sinne der Figur 4 so weit nach links bewegt, bis sich ein von ihnen aufgenommenes, fertig bearbeitetes Werkstück außerhalb des innenverzahnten Werkzeugs T in einer Übergabeposition 24 befindet. Die Greifeinrichtung 28 wird so zur Übergabeposition 24 verfahren, daß der freie Greifer 30 das von den Spanneinrichtungen 17, 18 freigegebene Werkstück aufnehmen kann. Sodann wird die Greifeinrichtung 28 weiter verfahren, bis das vom anderen Greifer 29 gehaltene zu bearbeitende Werkstück in die Übergabeposition 24 gelangt ist, wo es von den Spanneinrichtungen 17, 18 aufgenommen wird. Schließlich wird die Greifeinrichtung 28 in die gezeichnete Position zurückgebracht und das zu bearbeitende Werkstück durch entsprechendes Verschieben von Spindelstock 3 und Reitstock 4 in das Werkzeug T verschoben, wo durch Bewegen des Horizontalschlittens 7 im Sinne einer Achsabstandsverringerung der Zahneingriff zwischen Werkzeug T und Werkstück W hergestellt wird. (Damit es dabei auch bei stellungsgerecht zugeführtem Werkstück nicht zu einer Beschädigung der Werkzeug- und/oder Werkstückzahnflanken kommt, erfolgt gleichzeitig mit der Achsabstandsveränderung auch eine entsprechende Änderung des Achskreuzwinkels γ, wie das aus der DE 33 44 548 A1 bekannt ist.) Der Greifer 30 setzt das von ihm gehaltene Werkstück auf einem nicht dargestellten Magazin oder Förderer ab oder übergibt es an eine externe Handhabungseinrichtung, und der andere Greifer 29 nimmt von einem anderen, ebenfalls nicht dargestellten Magazin oder Förderer oder von einer anderen externen Handhabungseinrichtung ein neues Werkstück auf. Je nach den Gegebenheiten können die Greifer 29, 30 um ihre vertikalen Achsen B1, B2 schwenkbar sein und/oder an der Greifeinrichtung 28 zusätzlich parallel zur Pfeilrichtung Z verfahrbar sein. Insofern ist die dargestellte Greifeinrichtung 28 nur als eine von vielen möglichen Ausführungen anzusehen.

Wenn eine vorgegebene Anzahl von Werkstücken W bearbeitet worden ist, kann der Maschine an Stelle eines neuen zu bearbeitenden Werkstücks W auch ein nicht dargestelltes, abmessungsgleiches Abziehrad zugeführt werden, mit dem das Werkzeug T wieder abgezogen werden kann.

Aus der Figur 3 ist gut zu erkennen, daß der verhältnismäßig kleine Arbeitsraum der Maschine mit einfachen, der besseren Übersichtlichkeit wegen nicht dargestellten bekannten Mitteln wie Wand- und Fensterelementen umgeben und so geschlossen werden kann. Dabei ist für die Greifeinrichtung nur auf der hinteren Seite eine entsprechende Öffnung vorzusehen, die normalerweise geschlossen ist, z.B. mit elastischen Klappen, die den Austritt von Ölnebel weitestgehend verhindern, den Durchgang der Greifeinrichtung aber ohne weiteres Zutun möglich machen.

### Begriffsliste

- 1: Maschinengestell
- 2: Bett
- 3: Spindelstock
- 4: Reitstock
- 5: Bereich von 1
- 6: Längsführung
- 7: Horizontalschlitten
- 8: Motor für 7
- 9: Vertikalführung
- 10: Vertikalschlitten
- 11: Motor für 10
- 12: Rundführung
- 13: Werkzeugkopf
- 14: Öffnung in 13
- 15: Motor für T
- 16: Getriebe
- 17: Spanneinrichtung von 3
- 18: Spanneinrichtung von 4
- 19: Führung für 3
- 20: Antrieb
- 21: Führung für 4
- 22: Antrieb
- 23: ---
- 24: Übergabeposition
- 25: Handhabungseinrichtung
- 26: Gestell von 25
- 27: Führung
- 28: Greifeinrichtung
- 29: Greifer
- 30: Greifer
- a: Achsabstand
- A: Achse von 12
- B1: Schwenkachse von 29
- B2: Schwenkachse von 30
- C1: Werkzeugachse
- C2: Werkstückachse
- T: Werkzeug
- U: Horizontalbewegung von 28
- V: Vertikalbewegung von 28
- W: Werkstück
- X: Horiz.bewegung von 7 u.T
- Y: Vertikalbewgg. von 9 u.T
- Z: Horizontalbewegung von W
- γ: Achskreuzwinkel

## Patentansprüche

1. Maschine zum Feinbearbeiten der Zahnflanken von zahnradförmigen Werkstücken (W) mit einem innenverzahnten Werkzeug (T), mit
a) einem Maschinenbett (2) und einem darauf verschiebbaren und dafür gesteuert antreibbaren Horizontalschlitten (7) für die Bewegung eines Werkzeugkopfes (13) in der X-Richtung, d. h. rechtwinklig zur Achse (C2) des zu bearbeitenden Werkstücks (W), wobei der Werkzeugkopf (13) der drehantreibbaren Aufnahme des innenverzahnten Werkzeugs (T) dient und in einer Rundführung (12) um eine in der X-Richtung liegende Achse (A) winkeleinstellbar ist,
b) einem Spindelstock (3) und einem Reitstock (4) zur drehantreibbaren Aufnahme des zu bearbeitenden Werkstücks (W), die beiderseits des Werkzeugkopfes (13) auf dem Maschinenbett (2) vorgesehen sind, wobei
b1) der Reitstock (4) auf dem Maschinenbett (2) in Z-Richtung d.h. in Richtung der Werkstückachse (C2) bewegbar ist, und wobei
b2) eine steuerbare Relativbewegung zwischen dem Werkzeugkopf (13) und dem Spindelstock (3) bzw. Reitstock (4) in der Z-Richtung sowie ein selbsttätiges Zu- und Abführen der Werkstücke (W) bzw. eines Abrichtwerkzeugs anstelle eines Werkstücks (W) vorgesehen ist,
dadurch **gekennzeichnet**, daß
c) der Horizontalschlitten (7) unmittelbar auf dem Maschinenbett (2) angeordnet ist und einen die Rundführung (12) aufweisenden Vertikalschlitten (9) trägt, der in Y-Richtung, d.h. senkrecht zur X- und zur Z-Richtung verschiebbar und dafür antreibbar ist, und
d) auch der Spindelstock (3) in der Z-Richtung bewegbar und dafür antreibbar und der Reitstock (4) entsprechend gesteuert nachführbar ist, sowohl zur Ausführung der Relativbewegung zwischen Werkzeug (T) und Werkstück (W) in der Z-Richtung als auch zur Handhabung des Werkstücks (W) und des Abrichtwerkzeugs

2. Maschine nach Anspruch 1, gekennzeichnet durch ein integriertes Handhabungssystem (25) zum Zuführen eines zu bearbeitenden Werkstücks (W) in eine Übergabeposition (24) seitlich neben dem Werkzeugkopf (13) und zum Abführen eines bearbeiteten Werkstücks (W) aus dieser Position (24) bzw. zum Zu- und Abführen des Abrichtwerkzeugs, wobei das Werkstück (W) bzw. das Abrichtwerkzeug in der Übergabeposition (24) von Spanneinrichtungen (17, 18), die dem für die Handhabung in der Z-Richtung entsprechend weit bewegbaren Spindelstock (3) und dem Reitstock (4) zugehören, aufnehmbar bzw. abgebbar sind, mit einem mit dem Maschinengestell (1) verbundenen Gestell (26) und daran verschiebbar geführten Einrichtungen (28) zum Aufnehmen, Verfahren und Abgeben der Werkstücke (W) bzw. des Abrichtwerkzeugs, wobei diese Einrichtungen (28) neben der dem Spindelstock (3) zugewendeten Seite des Horizontalschlittens (7) angeordnet und parallel zur X- und/oder Y-Richtung an dem Geste (26) in einer U- oder V-Richtung verschiebbar sind.

## Claims

1. A machine for fine machining the tooth profiles of gear-shaped workpieces (W) with an internally toothed tool (T), with
a) a machine bed (2) and a drivable horizontal slide (7), displaceable thereon and controlled for that purpose, for moving a tool head (13) in the X-direction, i.e. at right angles to the axis (C2) of the workpiece (W) to be machined, the tool head (13) serving to hold the internally toothed tool (T) so that it is drivable rotationally, and being angularly adjustable in a circular guide (12) about an axis (A) lying in the X-direction,
b) a headstock (3) and a tailstock (4) for holding the workpiece (W) to be machined so that it is drivable rotationally, the said headstock and tailstock being provided on either side of the tool head (13) on the machine bed (2), wherein
b1) the tailstock (4) is movable on the machine bed (2) in the Z-direction, i.e. in the direction of the workpiece axis (C2), and wherein
b2) a controllable relative movement between the tool head (13) and the headstock (3) or tailstock (4) in the Z-direction and automatic feed and removal of the workpieces (W) or a dressing tool instead of a workpiece (W) is provided,
characterised in that
c) the horizontal slide (7) is arranged directly on the machine bed (2) and carries a vertical slide (9) which has the circular guide (12) and which is displaceable in the Y-direction, i.e. perpendicularly to the X- and Z-direction, and is drivable for that purpose, and
d) the headstock (3) is also movable in the Z-direction and is drivable for that purpose and the tailstock (4), appropriately controlled, is able to follow, both in order to effect the relative movement between the tool (T) and the workpiece (W) in the Z-direction and to handle the tool (W) and the dressing tool.

2. A machine according to claim 1, characterised by an integral handling system (25) for conveying a workpiece (W) to be machined into a transfer position (24) laterally adjacent to the tool head (13) and for removing a machined workpiece (W) from this position (24) or for conveying and removing the dressing tool, wherein the workpiece (W) or the dressing tool in the transfer position (24) may be received or released by clamping devices (17, 18) which belong to the headstock (3) and the tailstock (4) which are movable an appropriate distance in the Z-direction for the handling operation, with a frame (26) connected to the machine frame (1) and devices (28) displaceably guided thereon for picking up, conveying and delivering the workpieces (W) or the dressing tool, these devices (28) being arranged close to the side of the horizontal slide (7) directed towards the headstock (3) and being displaceable parallel to the X- and/or Y-direction on the frame (26) in a U-direction or V-direction.

## Revendications

1. Machine pour la finition des flancs des dents de pièces en forme de roues dentées, en utilisant un outil à denture intérieure, dans laquelle
a) un banc de machine (2) porte, coulissant sur lui sous l'action d'un entraînement commandé pour cela, un chariot horizontal (7) assurant le déplacement d'une tête d'usinage (13) selon la direction X, c'est-à-dire perpendiculairement à l'axe (C2) de la pièce à usiner (W) cette tête d'usinage (13) servant à loger avec entraînement l'outil (T) à denture intérieure et tournant sur un guidage circulaire (12) autour d'un axe (A) perpendiculaire à la direction X, avec réglage de sa position angulaire,
b) une poupée fixe (3) et une contre-poupée mobile (4) servant à recevoir avec entraînement la pièce (W) à usiner, sont prévus de part et d'autre de la tête d'usinage (13) sur le banc (2) de la machine,
b1) la contre-poupée (4) peut se déplacer sur le banc (2) selon la direction 2, c'est-à-dire vers l'axe (C2) de la pièce,
b2) il est prévu de pouvoir commander un mouvement relatif entre la tête d'usinage (13) et la poupée fixe (3) et mobile (4) selon la direction Z, ainsi qu'une amenée et un enlèvement automatiques des pièces (W) ou d'un outil de taillage à la place d'une pièce (W),
caractérisée en ce que
c) le chariot horizontal (7) est monté directement sur le banc (2) de la machine et porte un chariot vertical (9) équipé du guidage circulaire (12) et pouvant coulisser et être entraîné pour cela, selon la direction Y, c'est-à-dire perpendiculairement aux directions X et Z,
d) également la poupée fixe (3) peut se déplacer selon la direction Z et être entraînée pour cela tandis que la contre-poupée mobile (4) peut suivre en étant commandée pour cela, aussi bien pour produire le mouvement relatif de l'outil (T) et de la pièce (W) selon la direction Z que pour assurer la manutention de la pièce (W) et de l'outil de taillage.

2. Machine selon la revendication 1,
caractérisée en ce que
• un dispositif intégré de manutention (25) sert à amener une pièce à usiner (W) dans une position de transfert (24) située sur le côté et près de la tête d'usinage (13) et également à évacuer de cette position (24) une pièce usinée (W), et de même pour amener et retirer l'outil de taillage,
• la pièce (W) ou l'outil de taillage peuvent être saisis et relâchés quand ils sont en position de transfert (24), par des dispositifs de serrage (17, 18) qui appartiennent à la poupée (3) et à la contre-poupée (4) pouvant se déplacer largement selon la direction (Z) pour assurer ces manipulations,
• un châssis (26) relié au banc de machine (1) porte, coulissant avec guidage sur le châssis, des dispositifs (28) servant à recevoir, déplacer et délivrer les pièces (W) ou l'appareil de taillage, ces dispositifs (28) étant montés près du côté du chariot horizontal (7) situé en face de la poupée (3) et pouvant coulisser parallèlement à la direction X et/ou Y sur le châssis (26), dans une direction U ou V.
